# EUROPEAN PATENT SPECIFICATION

(11) **EP 0 763 469 B1**
(45) Date of publication and mention of the grant of the patent: **12.04.2000**
(21) Application number: 96117030.5
(22) Date of filing: 24.05.1993
(51) Int. Cl.: B65B 3/04, B05B 11/00

(54) **Insertable liner for a narrow neck dispensing container and method of filling such a liner through the syphon tube**
Einsetzbare Auskleidung für einen Ausgabebehälter mit engem Hals und Verfahren zum Befüllen solcher Auskleidungen durch ein Siphonrohr
Doublure insérable pour récipient de distribution à col étroit et procédé de remplissage d'une telle doublure par le syphon tubulaire

(30) Priority: 22.05.1992 US 887032; 17.03.1993 US 32585
(43) Date of publication of application: 19.03.1997
(62) Divisional of application: 93911383.3
(73) Proprietor: MESHBERG, Philip, Palm Beach, FL 33480 (US)
(72) Inventor: MESHBERG, Philip, Palm Beach, FL 33480 (US)
(74) Representative: Howden, Christopher Andrew

(56) References cited:
- DE-A- 2 710 984
- FR-A- 2 685 285
- GB-A- 2 155 117
- US-A- 3 361 303
- US-A- 4 457 455

## Description

### Background of the Invention

### Field of the Invention

The present invention relates to a dispenser including a dispensing pump and a dispensing container. The present invention also includes a syphon tube through which the container may be filled.

According to one aspect of the invention, there is provided a method for filling a container with a product to be dispensed comprising the steps of: providing a narrow neck dispensing container; disposing a syphon tube structure at least partially within the container, said syphon tube structure comprising a syphon tube, such that said syphon tube extends substantially axially inwardly into the container; characterised by engaging a filling nozzle with the syphon tube structure near an axially outward end of said syphon tube; dispensing a product through said filling nozzle so that it flows through said syphon tube and into said container whereby said product completely fills said syphon tube; and disengaging said filling nozzle from said syphon tube structure.

According to another aspect, there is provided an apparatus for dispensing a flowable product comprising: a container for holding said flowable product and a syphon tube structure comprising an upper portion and a syphon tube extending axially inwardly into said container and having an axially outward end connected to said upper portion, characterised in that said upper portion directly engages said container and has a vent path allowing air to enter and exit said container during a filling and a dispensing operation.

The present apparatus is particularly useful in that it does not require disassembly and reassembly of the pump structure during the filling process. The present invention therefore is much more economical and efficient, and allows easy priming of the pump.

### Brief Description of the Drawings

FIGURE 1 shows a first embodiment of the syphon tube structure of the present invention during a filling operation;
FIGURE 2 shows the first embodiment of the syphon tube structure of the present invention after a filling operation, with the pump mounted to the container;
FIGURE 3 shows a second embodiment of the syphon tube structure of the present invention during a filling operation;
FIGURE 4 shows the second embodiment of the syphon tube structure of the present invention after a filling operation, with the pump mounted to the container;
FIGURE 5 shows a first alternative configuration of the syphon tube structure in the present invention;
FIGURE 6 shows a second alternative configuration of the syphon tube structure in the present invention;
FIGURE 7 shows a cross-sectional view of the syphon tube of the second alternative configuration, after the pump is mounted to the container;
FIGURE 8 shows a cross-sectional view of the syphon tube of the second alternative configuration, during the filling process.

### Description of the Preferred Embodiments

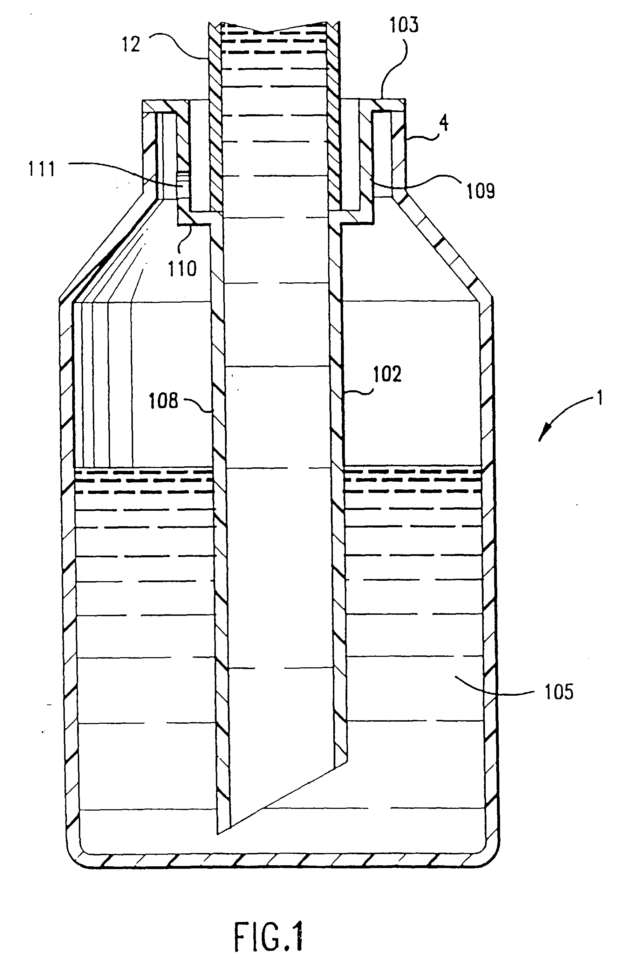

Fig. 1 represents the syphon tube structure of present invention during a filling operation. A container or bottle **1** of any conventional type used for holding a product to be dispensed has inserted therein a syphon tube structure **102**. The syphon tube structure **102** can be a separately formed, as shown in Fig. 1, or could be integrally molded with container **1**. Syphon tube structure **102** has a radially-extending flange **103** which cooperates with the neck **4** of container **1** to seat syphon tube structure **102** in container **1**. Syphon tube structure **102** also has a syphon tube **108** and an upper portion **109**. Syphon tube structure **102** is inserted into container 1 before container **1** is filled with product **105**.

After insertion of syphon tube structure **102** into container **1**, container **1** is filled with a product **105** to be dispensed from container **1**. Filling is accomplished by inserting a filling nozzle **12** into the upper portion **109** of syphon tube structure **102**. The bottom of filling nozzle **12** cooperates with a flange **110** on upper portion **109**. Product **105** is then pumped or forced out filling nozzle **12**, down syphon tube **108**, and into container **1**. Upper portion **109** has a vent path **111**. As product **105** flows into container **1**, the air in the container which it displaces is pushed up to the top of the container **1** and out vent path **111**. Filling of product **105** into container **1** is continued until the quantity of product **105** in container **1** reaches a desirable level, generally when product **5** reaches the level of the flange **10**.

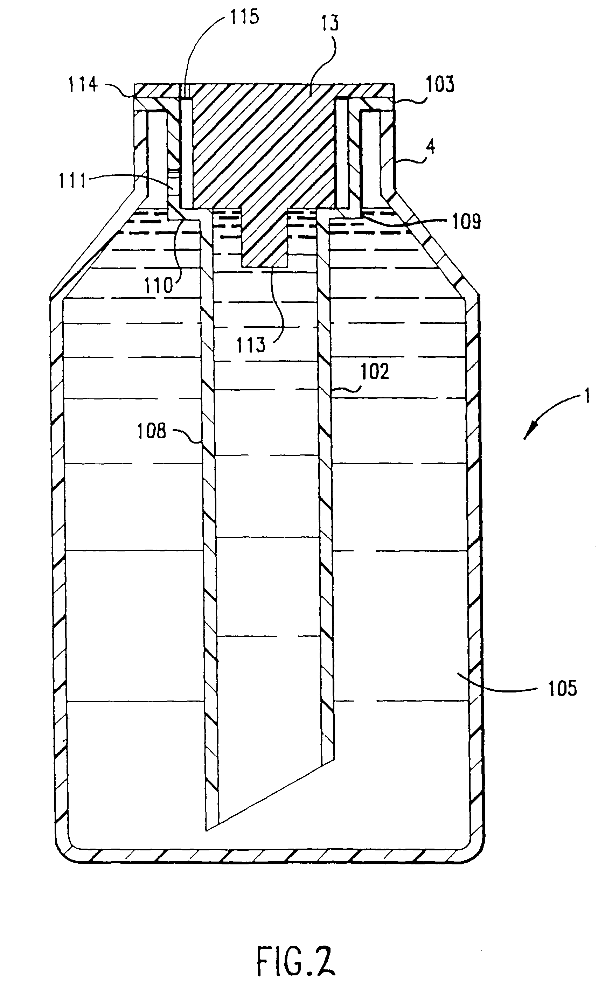

Fig. 2 represents the apparatus of the present invention after filling has been completed, and immediately after insertion of a pump **13** (shown schematically in Fig. 2). The internal structure of pump **13** can be of any type known to those skilled in the art for dispensing product from a container. As can be seen in Fig. 2, because of the manner in which container **1** was filled according to the description above, the product has filled the interior of the syphon tube **108** all the way up to the flange **110**. Therefore, when pump **13** is inserted into upper portion **109**, as shown in Fig. 2, there is no air in syphon tube **108**. The lower inlet **113** of pump **13** is inserted directly into product **105**. Priming the pump requires only drawing the product **105** through lower inlet **113** and into pump **13**. This arrangement makes priming of pump **13** much easier, since only the air in pump **13** must be evacuated, and there is no air in syphon tube **108** which must be drawn up and out of the nozzle. To aid in the filling and priming of the pump-container combination when highly viscous products are used, it is advantageous to make the syphon tube **108** of a relatively large diameter.

As shown in Fig. 2, pump **13** has an upper flange **114** which may cooperate with the flange **103** and neck **4** to secure the pump **13** to the container **1**. Flange **114** can have a vent path **115**. Vent paths **111** and **115** cooperate to allow venting of the container during dispensing operations, i.e., during operation of pump **112**. Thus, as product **105** is drawn out of container **1** by the action of pump **13**, air will travel through vent paths **111** and **115** to fill the resulting space in container **1**.

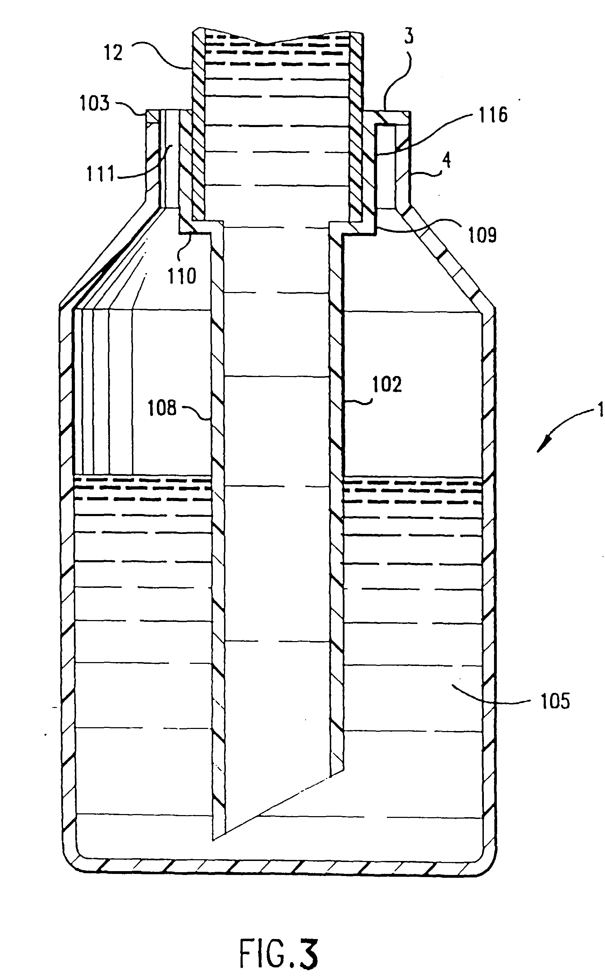

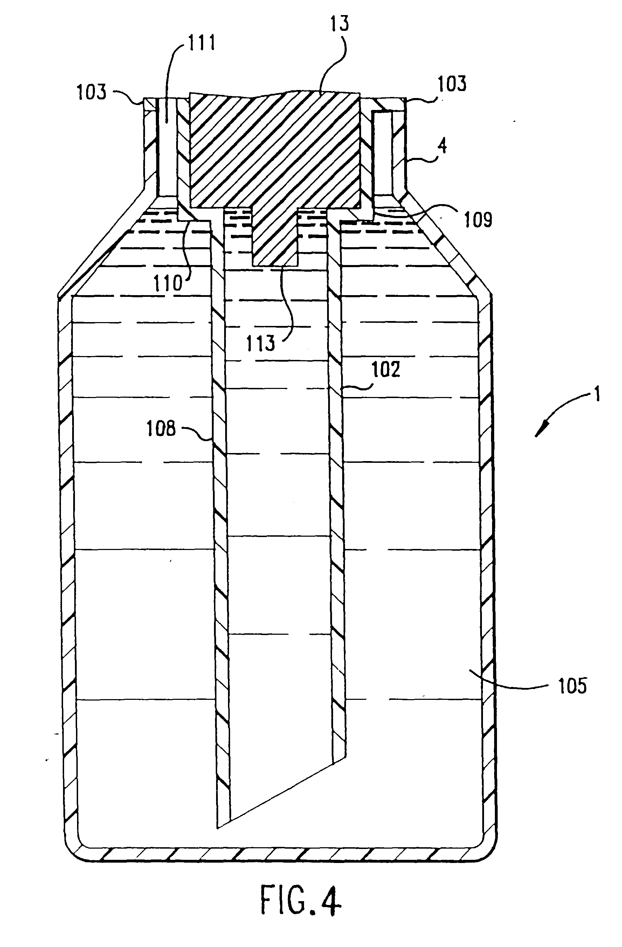

Fig. 3 shows an alternative embodiment where the vent path **111** is located on flange **103**. This embodiment allows the filling nozzle to cooperate with both the flange **110** and sidewalls **116** of upper portion **109**. Fig. 4 shows this embodiment with the pump **13** inserted. As can be seen in Fig. 4 this embodiment allows the pump **13** body to cooperate with the flange **110** as well as sidewalls **116**. There is therefore no need for an engaging flange on pump **13**. Venting of the container during a dispensing operation can occur directly through vent path **111**.

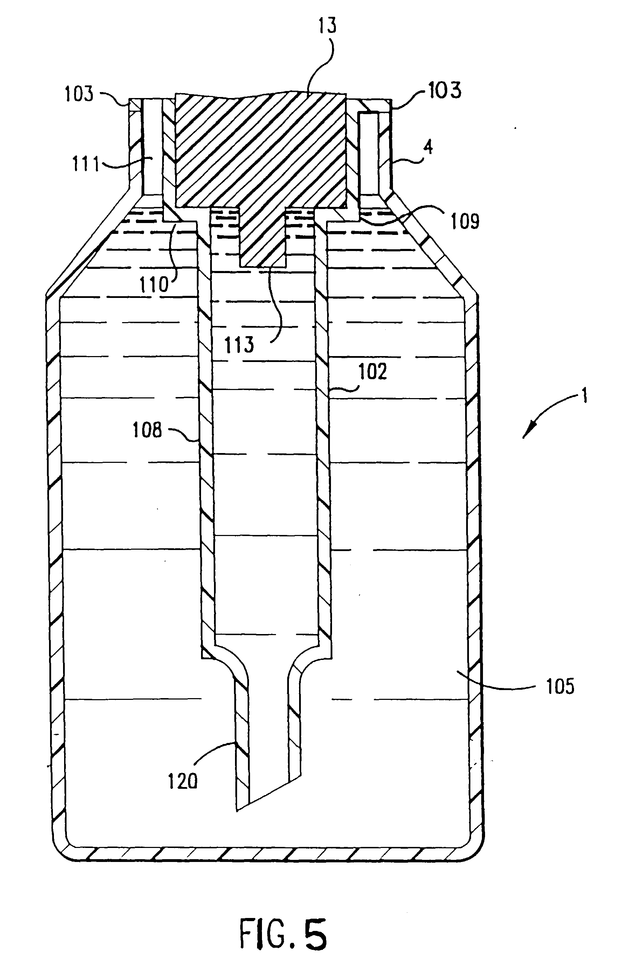

Fig. 5 demonstrates that the syphon tube **108** of the present invention need not be straight-sided as shown in Figs. 1-4 Syphon tube **108** may have a narrowed portion **120**, or alternatively a series of stepped portions gradually increasing in diameter. The size and shape of syphon tube can be designed to be particularly effective for the degree of viscosity of the product to be dispensed. Stepping of the syphon tube **108** allows the portion of product left in the syphon tube after the container is empty to be reduced.

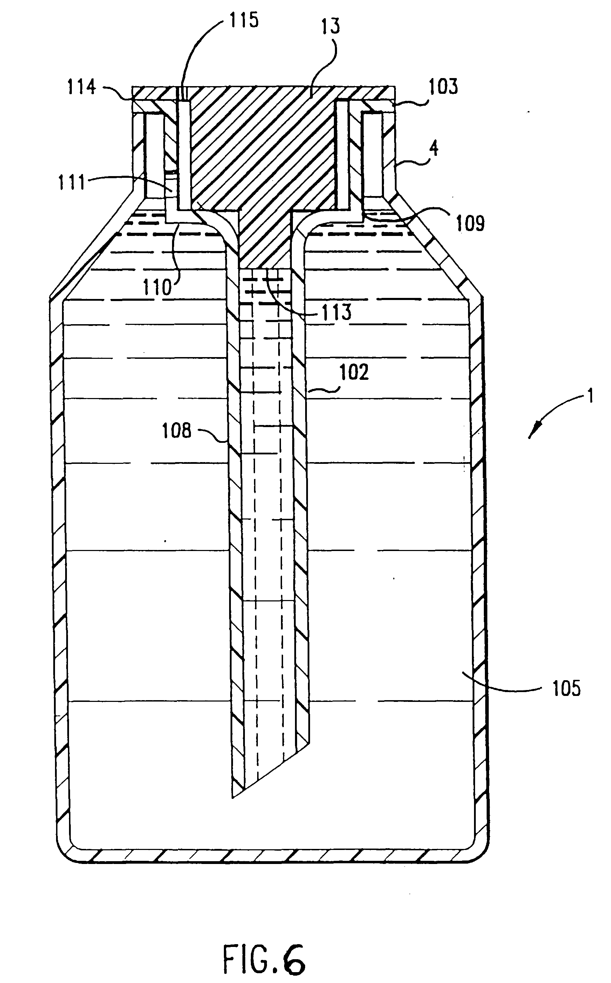

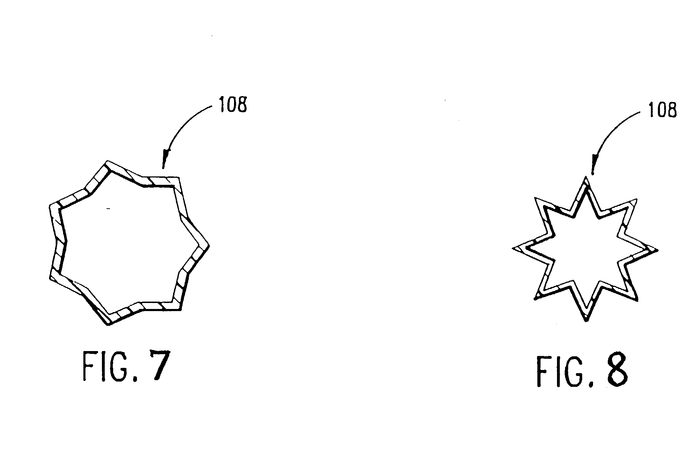

Figs. 6-8 show an alternative design of the syphon tube in the present invention. Figs. 7 and 8 are cross-sectional views of the syphon tube in this alternative design. As can be seen from these figures, the syphon tube is corrugated along its length. The syphon tube is constructed of a resilient material so that it is normally in the configuration shown in Fig. 7. Fig. 8 represents the syphon tube configuration during a filling process. Thus, when filling nozzle **12** is inserted into upper portion **109** and product is pumped or forced out of filling nozzle **12**, the pressure of the product pushes the walls of syphon tube **108** outwardly so that the syphon tube assumes the configuration shown in Fig. 8. The increase in size of the diameter of the syphon tube **108** allows filling of the container 1 to proceed rapidly. After filling is completed, the resiliency of the syphon tube **108** causes the corrugations to collapse to the configuration of Fig. 7. This configuration allows the volume of the syphon tube **108** to be reduced. Reducing the volume of the syphon tube **108** ensures that there is a relatively small volume of product left over in the syphon tube after all of the product **105** has been evacuated from the container **1** during a dispensing operation. Although Fig. 6 shows the corrugated syphon tube structure used with the upper portion structure of Figs. 1-2, this syphon tube structure could be used equally well with the upper portion structure of Figs. 3-6.

One technique which can be used to assist in the filling of the apparatus of the present invention is to apply a vacuum to vent **111**, thereby drawing out excess air in container **1** and assisting in drawing product **105** from filling nozzle **12** into container **1**. This use of a vacuum is easily accomplished during a filling operation, and does not require disassembly of any of the parts of the apparatus, unlike the circumstance where the product must be drawn up a syphon tube by the application of a vacuum to the pump.

## Claims (Claims for the following Contracting State(s): DE, GB)

1. A method for filling a container (1) with a product to be dispensed comprising the steps of:
providing a narrow neck dispensing container (1);
disposing a syphon tube structure (102) at least partially within the container, said syphon tube structure comprising a syphon tube (108), such that said syphon tube (108) extends substantially axially inwardly into the container;
characterised by engaging a filling nozzle (12) with the syphon tube structure (102) near an axially outward end of said syphon tube (108);
dispensing a product (105) through said filling nozzle so that it flows through said syphon tube (108) and into said container (1) whereby said product (105) completely fills said syphon tube (108); and
disengaging said filling nozzle (12) from said syphon tube structure.

2. The method of claim 1 further comprising the step of:
providing a vent path (111) in said syphon tube structure (102), said vent path (111) remaining open during said step of dispensing a product (105) through said filling nozzle (12), whereby air within the container is vented from the container.

3. The method of claim 2, further comprising the step of:
during said step of dispensing a product (105) through said filling nozzle (12), applying a vacuum to said vent path (111) to draw air from said container, and to draw said product (105) into said container.

4. The method of claim 2, further comprising the step of:
providing a flange (103) on said syphon tube structure, which flange engages said container (1), and providing said vent path (111) through said flange.

5. The method of claim 2, further comprising the step of:
providing an axially-inwardly projecting sidewall on said syphon tube structure (102) and providing said vent path (111) through said sidewall.

6. The method of claim 1, further comprising the step of:
attaching a pump (13) to said syphon tube structure after said step of disengaging said filling nozzle (12) from said syphon tube structure.

7. The method of claim 6, further comprising the step of:
providing a circumferential flange (103) connected to said syphon tube, and engaging said pump (13) with said circumferential flange.

8. The method of claim 6, further comprising the step of:
providing an axially-inwardly projecting sidewall (116) on said syphone tube structure, and engaging said pump (13) with said sidewall.

9. The method of claim 1, further comprising the step of:
providing a circumferential flange (110) connecting to said syphon tube (108) and said syphon tube structure, said filling nozzle (12) engaging said circumferential flange during said steps of engaging a filling nozzle with the syphon tube structure and dispensing a product through said filling nozzle.

10. The method of claim 1, further comprising the step of:
varying the diameter of said syphon tube (108) along said syphon tube's axial length.

11. The method of claim 1, further comprising the step of:
corrugating said syphon tube (108) such that during said process of dispensing a product through said filling nozzle, said syphon tube expands in diameter.

12. An apparatus for dispensing a flowable product (105) comprising:
a container (1) for holding said flowable product and a syphon tube structure (102) comprising an upper portion (109) and a syphon tube (108) extending axially inwardly into said container and having an axially outward end connected to said upper portion (109), characterised in that said upper portion (109) directly engages said container and has a vent path (111) allowing air to enter and exit said container (1) during a filling and a dispensing operation.

13. The apparatus of claim 12, wherein:
said upper portion is adapted to engage a filling nozzle (12) to allow said product to fill said container via said syphon tube (108).

14. The apparatus of claim 12, wherein:
said upper portion engages said container via a circumferential flange (5), said vent path (111) passing through said circumferential flange.

15. The apparatus of claim 14, further comprising:
a pump structure (15) mounted on said container, said pump structure comprising a circumferential flange (116), said circumferential flange (114) on said pump structure engaging said circumferential flange (103) on said upper portion.

16. The apparatus of claim 15, further comprising:
a second vent path (115) passing through said circumferential flange (114) on said pump structure, said second vent path being aligned with said vent path.

17. The apparatus of claim 12, wherein:
said upper portion comprises an axially-inwardly extending sidewall (116) said vent path (111) passing through said sidewall.

18. The apparatus of claim 17, further comprising:
a pump structure (13) mounted on said container, said pump structure engaging said axially-inwardly extending sidewall (116).

19. The apparatus of claim 12, further comprising:
a pump structure (13) mounted on said container, said pump structure having an inlet end adjacent an axially outward end of said syphon tube (108).

20. The apparatus of claim 19, wherein:
said upper portion comprises an axially-inwardly extending sidewall (116) said pump structure (13) engaging said sidewall.

21. The apparatus of claim 19, wherein:
said upper portion comprises a circumferential flange (103), said pump structure (13) engaging said flange.

22. The apparatus of claim 12, wherein:
said syphon tube structure (102) is integrally formed with said container (1).

23. The apparatus of claim 12, wherein:
the diameter of said syphon tube (108) varies along said syphon tube's axial length.

24. The apparatus of claim 12, wherein:
the syphon tube (108) is corrugated.

25. The apparatus of claim 24, wherein:
the syphon tube (108) is formed of a resilient material so that it normally biased into a collapsed condition.

26. An apparatus for filling and dispensing from a container comprising:
a tubular section (108); and
an upper section (109), said upper section (109) being connected to said tubular section (108) at an end of said tubular section, said upper section having a passage connecting an interior of said tubular section with an interior of said upper section, said upper section further comprising:
a first flange (103) adapted to engage an outlet of a container;
a vent path (111); and
a second flange (110) adapted to engage a filling nozzle (12) inserted into said upper section.

27. The apparatus of claim 26, wherein:
said tubular section (108) is corrugated.

28. The apparatus of claim 27, wherein:
the syphon tube (108) is formed of a resilient material so that it normally biased into a collapsed condition.

29. The apparatus of claim 26, wherein:
said vent path (111) passes through said first flange (103).

30. The apparatus of claim 27, wherein:
said upper section further comprises an axially extending sidewall (106), said vent path (111) passing through said sidewall (106).

31. The apparatus of claim 26, wherein:
the upper section is further adapted to engage a pump structure (13).

32. The apparatus of claim 27, wherein:
the diameter of said tubular section (108) varies along said tubular section's axial length.

## Claims (Claims for the following Contracting State(s): FR)

1. A method for filling a container (1) with a product to be dispensed comprising the steps of:
providing a narrow neck dispensing container (1);
disposing a syphon tube structure (102) at least partially within the container, said syphon tube structure comprising a syphon tube (108), such that said syphon tube (108) extends substantially axially inwardly into the container;
characterised in that said syphon tube extends to the bottom of said container and in that a filling nozzle (12) is engaged with the syphon tube structure (102) near an axially outward end of said syphon tube (108);
a product (105) is dispensed through said filling nozzle so that it flows through said syphon tube (108) and into the bottom of said container (1) whereby said product (105) completely fills said syphon tube (108); and
said filling nozzle (12) is subsequently disengaged from said syphon tube structure.

2. The method of claim 1 further comprising the step of:
providing a vent path (111) in said syphon tube structure (102), said vent path (111) remaining open during said step of dispensing a product (105) through said filling nozzle (12), whereby air within the container is vented from the container.

3. The method of claim 2, further comprising the step of:
during said step of dispensing a product (105) through said filling nozzle (12), applying a vacuum to said vent path (111) to draw air from said container, and to draw said product (105) into said container.

4. The method of claim 2, further comprising the step of:
providing a flange (103) on said syphon tube structure, which flange engages said container (1), and providing said vent path (111) through said flange.

5. The method of claim 2, further comprising the step of:
providing an axially-inwardly projecting sidewall on said syphon tube structure (102) and providing said vent path (111) through said sidewall.

6. The method of claim 1, further comprising the step of:
attaching a pump (13) to said syphon tube structure after said step of disengaging said filling nozzle (12) from said syphon tube structure.

7. The method of claim 6, further comprising the step of:
providing a circumferential flange (103) connected to said syphon tube, and engaging said pump (13) with said circumferential flange.

8. The method of claim 6, further comprising the step of:
providing an axially-inwardly projecting sidewall (116) on said syphone tube structure, and engaging said pump (13) with said sidewall.

9. The method of claim 1, further comprising the step of:
providing a circumferential flange (110) connecting to said syphon tube (108) and said syphon tube structure, said filling nozzle (12) engaging said circumferential flange during said steps of engaging a filling nozzle with the syphon tube structure and dispensing a product through said filling nozzle.

10. The method of claim 1, further comprising the step of:
varying the diameter of said syphon tube (108) along said syphon tube's axial length.

11. The method of claim 1, further comprising the step of:
corrugating said syphon tube (108) such that during said process of dispensing a product through said filling nozzle, said syphon tube expands in diameter.

12. An apparatus for dispensing a flowable product (105) comprising:
a container (1) for holding said flowable product and a syphon tube structure (102) comprising an upper portion (109) and a syphon tube (108) extending axially inwardly into said container and having an axially outward end connected to said upper portion (109), characterised in that said upper portion (109) directly engages said container and has a vent path (111) allowing air to enter and exit said container (1) during a filling and a dispensing operation, and in that said syphon tube extends inwardly into the bottom of said container.

13. The apparatus of claim 12, wherein:
said upper portion is adapted to engage a filling nozzle (12) to allow said product to fill said container via said syphon tube (108).

14. The apparatus of claim 12, wherein:
said upper portion engages said container via a circumferential flange (5), said vent path (111) passing through said circumferential flange.

15. The apparatus of claim 14, further comprising:
a pump structure (15) mounted on said container, said pump structure comprising a circumferential flange (116), said circumferential flange (114) on said pump structure engaging said circumferential flange (103) on said upper portion.

16. The apparatus of claim 15, further comprising:
a second vent path (115) passing through said circumferential flange (114) on said pump structure, said second vent path being aligned with said vent path.

17. The apparatus of claim 12, wherein:
said upper portion comprises an axially-inwardly extending sidewall (116), said vent path (111) passsing through said sidewall.

18. The apparatus of claim 17, further comprising:
a pump structure (13) mounted on said container, said pump structure engaging said axially-inwardly extending sidewall (116).

19. The apparatus of claim 12, further comprising:
a pump structure (13) mounted on said container, said pump structure having an inlet end adjacent an axially outward end of said syphon tube (108).

20. The apparatus of claim 19, wherein:
said upper portion comprises an axially-inwardly extending sidewall (116), said pump structure (15) engaging said sidewall.

21. The apparatus of claim 19, wherein:
said upper portion comprises a circumferential flange (103), said pump structure (13) engaging said flange.

22. The apparatus of claim 12, wherein:
said syphon tube structure (102) is integrally formed with said container (1).

23. The apparatus of claim 12, wherein:
the diameter of said syphon tube (108) varies along said syphon tube's axial length.

24. The apparatus of claim 12, wherein:
the syphon tube (108) is corrugated.

25. The apparatus of claim 24, wherein:
the syphon tube (108) is formed of a resilient material so that it normally biased into a collapsed condition.

26. An apparatus for filling and dispensing from a container comprising:
a tubular section (108); and
an upper section (109), said upper section (109) being connected to said tubular section (108) at an end of said tubular section, said upper section having a passage connecting an interior of said tubular section with an interior of said upper section, said upper section further comprising:
a first flange (103) adapted to engage an outlet of a container;
a vent path (111); and
a second flange (110) adapted to engage a filling nozzle (12) inserted into said upper section.

27. The apparatus of claim 26, wherein:
said tubular section (108) is corrugated.

28. The apparatus of claim 27, wherein:
the syphon tube (108) is formed of a resilient material so that it normally biased into a collapsed condition.

29. The apparatus of claim 26, wherein:
said vent path (111) passes through said first flange (103).

30. The apparatus of claim 27, wherein:
said upper section further comprises an axially extending sidewall (106), said vent path (111) passing through said sidewall (106).

31. The apparatus of claim 26, wherein:
the upper section is further adapted to engage a pump structure (13).

32. The apparatus of claim 27, wherein:
the diameter of said tubular section (108) varies along said tubular section's axial length.

## Patentansprüche (Patentansprüche für folgende(n) Vertragsstaat(en): DE, GB)

1. Verfahren zum Füllen eines Behälters (1) mit einem abzugebenden Produkt, umfassend die Schritte:
Bereitstellen eines Abgabebehälters (1) mit engem Hals;
Anordnen eines Syphonrohraufbaus (102) zumindest teilweise innerhalb des Behälters, wobei der Syphonrohraufbau ein Syphonrohr (108) aufweist, so daß sich das Syphonrohr (108) im wesentlichen axial nach innen in den Behälter erstreckt;
dadurch gekennzeichnet, daß ein Füllmundstück (12) in der Nähe eines axial äußeren Endes des Syphonrohrs (8) mit dem Syphonrohraufbau (102) in Zusammenwirken gebracht wird;
ein Produkt (105) durch das Füllmundstück abgegeben wird, so daß es durch das Syphonrohr (108) und in den Behälter (1) fließt, so daß das Produkt (105) das Syphonrohr (108) vollständig füllt; und
das Füllmundstück (12) von dem Syphonrohraufbau gelöst wird.

2. Verfahren nach Anspruch 1, dadurch gekennzeichnet, daß ein Entlüftungsweg (111) in dem Syphonrohraufbau (102) bereitgestellt wird, wobei der Entlüflungsweg (111) während des Schritts des Abgebens eines Produkts (105) durch das Füllmundstück (12) offen bleibt, so daß Luft innerhalb des Behälters aus dem Behälter entlüftet wird.

3. Verfahren nach Anspruch 2, dadurch gekennzeichnet, daß während des Schritts des Abgebens eines Produkts (105) durch das Füllmundstück (12) ein Unterdruck an den Entlüftungsweg (111) angelegt wird, um Luft aus dem Behälter abzuziehen und das Produkt (105) in den Behälter hineinzuziehen.

4. Verfahren nach Anspruch 2, dadurch gekennzeichnet, daß ein Flansch (103) auf dem Syphonrohraufbau bereitgestellt wird, wobei der Flansch mit dem Behälter (1) zusammenwirkt, und daß der Belüftungsweg (111) durch den Flansch hindurch bereitgestellt wird.

5. Verfahren nach Anspruch 2, dadurch gekennzeichnet, daß eine axial und nach innen vorstehende Seitenwand auf dem Syphonrohraufbau (102) bereitgestellt wird, und daß der Entlüftungsweg (111) durch die genannte Seitenwand hindurch bereitgestellt wird.

6. Verfahren nach Anspruch 1, dadurch gekennzeichnet, daß eine Pumpe (13) auf dem Syphonrohraufbau angebracht wird, nach dem Schritt des Lösens des Füllmundstücks (12) von dem Syphonrohraufbau.

7. Verfahren nach Anspruch 6, dadurch gekennzeichnet, daß ein mit dem Syphonrohr verbundener Umfangsflansch (103) bereitgestellt wird und die Pumpe (13) mit dem Umfangsflansch zusammenwirkt.

8. Verfahren nach Anspruch 6, dadurch gekennzeichnet, daß eine axial und nach innen vorstehende Seitenwand (116) auf dem Syphonrohraufbau bereitgestellt wird, wobei die Pumpe (13) mit der Seitenwand zusammenwirkt.

9. Verfahren nach Anspruch 1, dadurch gekennzeichnet, daß ein Umfangsflansch (110) bereitgestellt wird, der mit dem Syphonrohr (108) und dem Syphonrohraufbau verbunden ist, wobei das Füllmundstück (12) mit dem Umfangsflansch zusammenwirkt während der Schritte, bei denen ein Füllmundstück mit dem Syphonrohraufbau in Zusammenwirken gebracht und ein Produkt durch das Füllmundstück abgegeben wird.

10. Verfahren nach Anspruch 1, dadurch gekennzeichnet, daß der Durchmesser des Syphonrohrs (108) entlang der axialen Länge des Syphonrohrs verändert wird.

11. Verfahren nach Anspruch 1, dadurch gekennzeichnet, daß das Syphonrohr (108) gewellt wird, so daß sich das Syphonrohr während des Vorgangs des Abgebens eines Produkts durch das Füllmundstück in seinem Durchmesser erweitert

12. Vorrichtung zum Abgeben eines fließfähigen Produkts (105), mit:
einem Behälter (1) zum Enthalten des fließfähigen Produkts und einem Syphonrohraufbau (102), der einen oberen Abschnitt (109) und ein Syphonrohr (108) aufweist, das sich axial und nach innen in den Behälter erstreckt und einen axial äußeren Endabschnitt aufweist, der mit dem oberen Abschnitt (109) verbunden ist, dadurch gekennzeichnet, daß der obere Abschnitt (109) unmittelbar mit dem Behälter zusammenwirkt und einen Entlüftungsweg (111) aufweist, der ermöglicht, daß Luft in den Behälter (1) während eines Füll- und eines Abgabevorgangs eintritt und daraus austritt.

13. Vorrichtung nach Anspruch 12, dadurch gekennzeichnet, daß der obere Abschnitt dazu bestimmt ist, mit einem Füllmundstück (12) zusammenzuwirken, um zu ermöglichen, daß das Produkt den Behälter über das Syphonrohr (108) füllt.

14. Vorrichtung nach Anspruch 12, dadurch gekennzeichnet, daß der obere Abschnitt mit dem Behälter über einen Umfangsflansch (103) zusammenwirkt, wobei der Entlüftungsweg (111) durch den Umfangsflansch verläuft.

15. Vorrichtung nach Anspruch 14, gekennzeichnet durch einen Pumpaufbau (15), der auf dem Behälter angebracht ist, wobei der Pumpaufbau einen Umfangsflansch (114) aufweist, wobei der Umfangsflansch (114) auf dem Pumpaufbau mit dem Umfangsflansch (103) auf dem oberen Abschnitt zusammenwirkt.

16. Vorrichtung nach Anspruch 15, dadurch gekennzeichnet, daß ein zweiter Entlüftungsweg (115) durch den Umfangsflansch (1 14) auf dem Pumpaufbau verläuft, wobei der zweite Entlüftungsweg mit dem genannten Entlüftungsweg ausgerichtet ist.

17. Vorrichtung nach Anspruch 12, dadurch gekennzeichnet, daß der obere Abschnitt eine sich axial und nach innen erstreckende Seitenwand (116) aufweist, wobei der Entlüftungsweg (111) durch die Seitenwand verläuft.

18. Vorrichtung nach Anspruch 17, dadurch gekennzeichnet, daß ein Pumpaufbau (15) auf dem Behälter angebracht ist, wobei der Pumpaufbau mit der sich axial und nach innen erstreckenden Seitenwand (116) zusammenwirkt.

19. Vorrichtung nach Anspruch 12, dadurch gekennzeichnet, daß ein Pumpaufbau (15) auf dem Behälter angebracht ist, wobei der Pumpaufbau ein Einlaßende benachbart einem axial äußeren Endabschnitt des Syphonrohrs (108) aufweist.

20. Vorrichtung nach Anspruch 19, dadurch gekennzeichnet, daß der obere Abschnitt eine sich axial und nach innen erstreckende Seitenwand (116) aufweist, wobei der Pumpaufbau (15) mit der Seitenwand zusammenwirkt.

21. Vorrichtung nach Anspruch 19, dadurch gekennzeichnet, daß der obere Abschnitt einen Umfangsflansch (103) aufweist, wobei der Pumpaufbau (13) mit dem Flansch zusammenwirkt.

22. Vorrichtung nach Anspruch 12, dadurch gekennzeichnet, daß der Syphonrohraufbau (102) einstückig mit dem Behälter (1) ausgebildet ist.

23. Vorrichtung nach Anspruch 12, dadurch gekennzeichnet, daß sich der Durchmesser des Syphonrohrs (108) entlang der axialen Länge des Syphonrohrs verändert.

24. Vorrichtung nach Anspruch 12, dadurch gekennzeichnet, daß das Syphonrohr (108) gerippt bzw. gewellt ist.

25. Vorrichtung nach Anspruch 24, dadurch gekennzeichnet, daß das Syphonrohr (108) aus einem nachgiebigen Material besteht, so daß es normalerweise in eine zusammengelegte Stellung bewegt ist.

26. Vorrichtung zum Füllen und Abgeben aus einem Behälter, mit:
einem rohrförmigen Abschnitt (108), und einem oberen Abschnitt (109), wobei der obere Abschnitt (109) mit dem rohrförmigen Abschnitt (108) an cinem Ende des rohrförmigen Abschnitts verbunden ist, wobei der obere Abschnitt einen Durchgang aufweist, der das Innere des rohrförmigen Abschnitts mit dem Inneren des oberen Abschnitts verbindet, wobei der obere Abschnitt ferner einen ersten Flansch (103) aufweist, der dazu bestimmt ist, mit einem Auslaß eines Behälters zusammenzuwirken; eine Entlüftungsöffnung (111); und einen zweiten Flansch (110), der dazu bestimmt ist, mit einem in den oberen Abschnitt eingesetzten Füllmundstück (12) zusammenzuwirken.

27. Vorrichtung nach Anspruch 26, dadurch gekennzeichnet, daß der rohrförmige Abschnitt (108) gerippt bzw. gewellt ist.

28. Vorrichtung nach Anspruch 27, dadurch gekennzeichnet daß das Syphonrohr (108) aus einem nachgiebigen Material besteht, so daß es normalerweise in eine zusammengelegte Stellung bewegt ist.

29. Vorrichtung nach Anspruch 26, dadurch gekennzeichnet, daß der Entlüftungsweg (111) durch den ersten Flansch (103) hindurchgeht.

30. Vorrichtung nach Anspruch 27, dadurch gekennzeichnet, daß der obere Abschnitt eine sich axial erstreckende Seitenwand (106) aufweist, wobei der Entlüftungsweg (111) durch die Seitenwand (106) hindurchgeht.

31. Vorrichtung nach Anspruch 26, dadurch gekennzeichnet, daß der obere Abschnitt dazu bestimmt ist, mit einem Pumpaufbau (13) zusammenzuwirken.

32. Vorrichtung nach Anspruch 27, dadurch gekennzeichnet, daß sich der Durchmesser des Rohrabschnitts (108) entlang der axialen Länge des Rohrabschnitts verändert.

## Patentansprüche (Patentansprüche für folgende(n) Vertragsstaat(en): FR)

1. Verfahren zum Füllen eines Behälters (1) mit einem abzugebenden Produkt, umfassend die Schritte:
Bereitstellen eines Abgabebehälters (1) mit engem Hals;
Anordnen eines Syphonrohraufbaus (102) zumindest teilweise innerhalb des Behälters, wobei der Syphonrohraufbau ein Syphonrohr (108) aufweist, so daß sich das Syphonrohr (108) im wesentlichen axial nach innen in den Behälter erstreckt;
dadurch gekennzeichnet, daß sich das Syphonrohr bis zu dem Boden des Behälters erstreckt und ein Füllmundstück (12) in der Nähe eines axial äußeren Endes des Syphonrohrs (8) mit dem Syphonrohraufbau (102) in Zusammenwirken gebracht wird;
ein Produkt (105) durch das Füllmundstück abgegeben wird, so daß es durch das Syphonrohr (108) und in den Behälter (1) fließt, so daß das Produkt (105) das Syphonrohr (108) vollständig füllt; und
das Füllmundstück (12) von dem Syphonrohraufbau gelöst wird.

2. Verfahren nach Anspruch 1, dadurch gekennzeichnet, daß ein Entlüftungsweg (111) in dem Syphonrohraufbau (102) bereitgestellt wird, wobei der Entlüftungsweg (111) während des Schritts des Abgebens eines Produkts (105) durch das Füllmundstück (12) offen bleibt, so daß Luft innerhalb des Behälters aus dem Behälter entlüftet wird.

3. Verfahren nach Anspruch 2, dadurch gekennzeichnet, daß während des Schritts des Abgebens eines Produkts (105) durch das Füllmundstück (12) ein Unterdruck an den Entlüftungsweg (111) angelegt wird, um Luft aus dem Behälter abzuziehen und das Produkt (105) in den Behälter hineinzuziehen.

4. Verfahren nach Anspruch 2, dadurch gekennzeichnet, daß ein Flansch (103) auf dem Syphonrohraufbau bereitgestellt wird, wobei der Flansch mit dem Behälter (1) zusammenwirkt, und daß der Belüftungsweg (111) durch den Flansch hindurch bereitgestellt wird.

5. Verfahren nach Anspruch 2, dadurch gekennzeichnet, daß eine axial und nach innen vorstehende Seitenwand auf dem Syphonrohraufbau (102) bereitgestellt wird, und daß der Entlüftungsweg (111) durch die genannte Seitenwand hindurch bereitgestellt wird.

6. Verfahren nach Anspruch 1, dadurch gekennzeichnet, daß eine Pumpe (13) auf dem Syphonrohraufbau angebracht wird, nach dem Schritt des Lösens des Füllmundstücks (12) von dem Syphonrohraufbau.

7. Verfahren nach Anspruch 6, dadurch gekennzeichnet, daß ein mit dem Sypbonrohr verbundener Umfangsflansch (103) bereitgestellt wird und die Pumpe (13) mit dem Umfangsflansch zusammenwirkt.

8. Verfahren nach Anspruch 6, dadurch gekennzeichnet, daß eine axial und nach innen vorstehende Seitenwand (116) auf dem Syphonrohraufbau bereitgestellt wird, wobei die Pumpe (13) mit der Seitenwand zusammenwirkt.

9. Verfahren nach Anspruch 1, dadurch gekennzeichnet, daß ein Umfangsflansch (110) bereitgestellt wird, der mit dem Syphonrohr (108) und dem Syphonrohraufbau verbunden ist, wobei das Füllmundstück (12) mit dem Umfangsflansch zusammenwirkt während der Schritte, bei denen ein Füllmundstück mit dem Syphonrohraufbau in Zusammenwirken gebracht und ein Produkt durch das Füllmundstück abgegeben wird.

10. Verfahren nach Anspruch 1, dadurch gekennzeichnet, daß der Durchmesser des Syphonrohrs (108) entlang der axialen Länge des Syphonrohrs verändert wird.

11. Verfahren nach Anspruch 1, dadurch gekennzeichnet, daß das Syphonrohr (108) gewellt wird, so daß sich das Syphonrohr während des Vorgangs des Abgebens eines Produkts durch das Füllmundstück in seinem Durchmesser erweitert.

12. Vorrichtung zum Abgeben eines fließfähigen Produkts (105), mit:
einem Behälter (1) zum Enthalten des fließfähigen Produkts und einem Syphonrohraufbau (102), der einen oberen Abschnitt (109) und ein Syphonrohr (108) aufweist, das sich axial und nach innen in den Behälter erstreckt und einen axial äußeren Endabschnitt aufweist, der mit dem oberen Abschnitt (109) verbunden ist, dadurch gekennzeichnet, daß der obere Abschnitt (109) unmittelbar mit dem Behälter zusammenwirkt und einen Entlüftungsweg (111) aufweist, der ermöglicht, daß Luft in den Behälter (1) während eines Füll- und eines Abgabevorgangs eintritt und daraus austritt, wobei sich das Syphonrohr nach innen in den Boden des Behälters erstreckt.

13. Vorrichtung nach Anspruch 12, dadurch gekennzeichnet, daß der obere Abschnitt dazu bestimmt ist, mit einem Füllmundstück (12) zusammenzuwirken, um zu ermöglichen, daß das Produkt den Behälter über das Syphonrohr (108) füllt.

14. Vorrichtung nach Anspruch 12, dadurch gekennzeichnet, daß der obere Abschnitt mit dem Behälter über einen Umfangsflansch (103) zusammenwirkt, wobei der Entlüftungsweg (111) durch den Umfangsflansch verläuft.

15. Vorrichtung nach Anspruch 14, gekennzeichnet durch einen Pumpaufbau (15), der auf dem Behälter angebracht ist, wobei der Pumpaufbau einen Umfangsflansch (114) aufweist, wobei der Umfangsflansch (114) auf dem Pumpaufbau mit dem Umfangsflansch (103) auf dem oberen Abschnitt zusammenwirkt.

16. Vorrichtung nach Anspruch 15, dadurch gekennzeichnet, daß ein zweiter Entlüftungsweg (115) durch den Umfangsflansch (114) auf dem Pumpaufbau verläuft, wobei der zweite Entlüftungsweg mit dem genannten Entlüftungsweg ausgerichtet ist.

17. Vorrichtung nach Anspruch 12, dadurch gekennzeichnet, daß der obere Abschnitt eine sich axial und nach innen erstreckende Seitenwand (116) aufweist, wobei der Entlüftungsweg (111) durch die Seitenwand verläuft.

18. Vorrichtung nach Anspruch 17, dadurch gekennzeichnet, daß ein Pumpaufbau (15) auf dem Behälter angebracht ist, wobei der Pumpaufbau mit der sich axial und nach innen erstreckenden Seitenwand (116) zusammenwirkt.

19. Vorrichtung nach Anspruch 12, dadurch gekennzeichnet, daß ein Pumpaufbau (15) auf dem Behälter angebracht ist, wobei der Pumpaufbau ein Einlaßende benachbart einem axial äußeren Endabschnitt des Syphonrohrs (108) aufweist.

20. Vorrichtung nach Anspruch 19, dadurch gekennzeichnet, daß der obere Abschnitt eine sich axial und nach innen erstreckende Seitenwand (116) aufweist, wobei der Pumpaufbau (15) mit der Seitenwand zusammenwirkt.

21. Vorrichtung nach Anspruch 19, dadurch gekennzeichnet, daß der obere Abschnitt einen Umfangsflansch (103) aufweist, wobei der Pumpaufbau (13) mit dem Flansch zusammenwirkt.

22. Vorrichtung nach Anspruch 12, dadurch gekennzeichnet, daß der Syphonrohraufbau (102) einstückig mit dem Behälter (1) ausgebildet ist.

23. Vorrichtung nach Anspruch 12, dadurch gekennzeichnet, daß sich der Durchmesser des Syphonrohrs (108) entlang der axialen Länge des Syphonrohrs verändert.

24. Vorrichtung nach Anspruch 12, dadurch gekennzeichnet, daß das Syphonrohr (108) gerippt bzw. gewellt ist.

25. Vorrichtung nach Anspruch 24, dadurch gekennzeichnet, daß das Syphonrohr (108) aus einem nachgiebigen Material besteht, so daß es normalerweise in eine zusammengelegte Stellung bewegt ist.

26. Vorrichtung zum Füllen und Abgeben aus einem Behälter, mit:
einem rohrförmigen Abschnitt (108), und einem oberen Abschnitt (109), wobei der obere Abschnitt (109) mit dem rohrförmigen Abschnitt (108) an einem Ende des rohrförmigen Abschnitts verbunden ist, wobei der obere Abschnitt einen Durchgang aufweist, der das Innere des rohrförmigen Abschnitts mit dem Inneren des oberen Abschnitts verbindet, wobei der obere Abschnitt ferner einen ersten Flansch (103) aufweist, der dazu bestimmt ist, mit einem Auslaß eines Behälters zusammenzuwirken; eine Entlüftungsöffnung (111); und einen zweiten Flansch (110), der dazu bestimmt ist, mit einem in den oberen Abschnitt eingesetzten Füllmundstück (12) zusammenzuwirken.

27. Vorrichtung nach Anspruch 26, dadurch gekennzeichnet, daß der rohrförmige Abschnitt (108) gerippt bzw. gewellt ist.

28. Vorrichtung nach Anspruch 27, dadurch gekennzeichnet, daß das Syphonrohr (108) aus einem nachgiebigen Material besteht, so daß es normalerweise in eine zusammengelegte Stellung bewegt ist.

29. Vorrichtung nach Anspruch 26, dadurch gekennzeichnet, daß der Entlüftungsweg (111) durch den ersten Flansch (103) hindurchgeht.

30. Vorrichtung nach Anspruch 27, dadurch gekennzeichnet, daß der obere Abschnitt eine sich axial erstreckende Seitenwand (106) aufweist, wobei der Entlüftungsweg (111) durch die Seitenwand (106) hindurchgeht.

31. Vorrichtung nach Anspruch 26, dadurch gekennzeichnet, daß der obere Abschnitt dazu bestimmt ist, mit einem Pumpaufbau (13) zusammenzuwirken.

32. Vorrichtung nach Anspruch 27, dadurch gekennzeichnet, daß sich der Durchmesser des Rohrabschnitts (108) entlang der axialen Länge des Rohrabschnitts verändert.

## Revendications (Revendications pour l'(les) Etat(s) contractant(s) suivant(s): DE, GB)

1. Procédé de remplissage d'un récipient (1) par un produit devant être distribué, comprenant les étapes consistant à :
fournir un récipient de distribution (1) à goulot étroit;
disposer une structure à tube formant siphon (102), au moins partiellement à l'intérieur du récipient, ladite structure à tube formant siphon comprenant un tube formant siphon (108), de manière que ledit tube formant siphon (108) s'étende sensiblement axialement à l'intérieur du récipient;
caractérisé par l'engagement d'une buse de remplissage (12) dans ledit tube formant siphon, à proximité d'une extrémité axialement extérieure dudit tube formant siphon (108);
distribuer un produit (105) par ladite buse de remplissage, de sorte qu'il s'écoule par ledit tube formant siphon (108) et pénètre jusqu'au fond dudit récipient (1), de sorte que ledit produit (105) remplisse complètement ledit tube formant siphon (108); et
désengager ladite buse de remplissage (12) de ladite structure à tube formant siphon.

2. Procédé selon la revendication 1, comprenant en outre l'étape consistant à :
fournir une voie d'évent (111) dans ladite structure à tube formant siphon (102), ladite voie d'évent (111) restant ouverte durant ladite étape de distribution d'un produit (105) par ladite buse de remplissage (12), de sorte que l'air se trouvant dans le récipient s'échappe de celui-ci.

3. Procédé selon la revendication 2, comprenant en outre l'étape consistant à :
pendant la durée de ladite étape de distribution d'un produit (105) par ladite buse de remplissage (12), appliquer un vide à ladite voie d'évent (111) pour extraire l'air dudit récipient, et pour attirer ledit produit (105) à l'intérieur dudit récipient.

4. Procédé selon la revendication 2, comprenant en outre l'étape consistant à :
fournir une bride (103) sur ladite structure à tube formant siphon, la bride venant en prise avec ledit récipient (1) et fournissant ladite voie d'évent (111) au travers de ladite bride.

5. Procédé selon la revendication 2, comprenant en outre l'étape consistant à :
fournir une paroi latérale faisant saillie axialement-intérieurement sur ladite structure à tube formant siphon (102), et aménager ladite voie d'évent (111) à travers ladite paroi latérale.

6. Procédé selon la revendication 1, comprenant en outre l'étape consistant à :
fixer une pompe (13) sur ladite structure à tube formant siphon, après ladite étape de désengagement de ladite buse de remplissage (12) vis-à-vis de ladite structure à tube formant siphon.

7. Procédé selon la revendication 6, comprenant en outre l'étape consistant à :
fournir une bride circonférentielle (103) reliée audit tube formant siphon, et mettre en prise ladite pompe (13) avec ladite bride circonférentielle.

8. Procédé selon la revendication 6, comprenant en outre l'étape consistant à :
fournir une paroi latérale (116) faisant saillie axialement-intérieurement sur ladite structure à tube formant siphon, et mettre en prise ladite pompe (13) avec ladite paroi latérale.

9. Procédé selon la revendication 1, comprenant en outre l'étape consistant à :
fournir une bride circonférentielle (110) reliant audit tube formant siphon (108) et à ladite structure à tube formant siphon, ladite buse de remplissage (12) venant en prise avec ladite bride circonférentielle durant lesdites étapes de mise en prise d'une buse de remplissage avec la structure à tube formant siphon et de distribution d'un produit par ladite buse de remplissage.

10. Procédé selon la revendication 1, comprenant en outre l'étape consistant à :
modifier le diamètre dudit tube formant siphon (108) le long de ladite longueur axiale dudit tube formant siphon.

11. Procédé selon la revendication 1, comprenant en outre l'étape consistant à :
façonner ledit tube formant siphon (108) en l'ondulant, de sorte que, pendant ledit processus de distribution d'un produit par ladite buse de remplissage, le diamètre dudit tube formant siphon augmente.

12. Appareil de distribution d'un produit (105) fluide, comprenant :
un récipient (1) pour contenir ledit produit fluide et une structure à tube formant siphon (102), comprenant une partie supérieure (109) et un tube formant siphon (108), s'étendant axialement intérieurement dans ledit récipient et ayant une extrémité axialement extérieure reliée à ladite partie supérieure (109), caractérisé en ce que ladite partie supérieure (109) vient directement en prise avec ledit récipient et a une voie d'évent (111), permettant à de l'air de pénétrer dans le, et de sortir du, dit récipient (1) durant une opération de remplissage et de distribution.

13. Appareil selon la revendication 12, dans lequel ladite partie supérieure est adaptée pour venir en prise avec une buse de remplissage (12) afin de permettre audit produit de remplir ledit récipient, via ledit tube formant siphon (108).

14. Appareil selon la revendication 12, dans lequel :
ladite partie supérieure vient en prise avec ledit récipient via une bride circonférentielle, ladite voie d'évent (111) passant à travers ladite bride circonférentielle.

15. Appareil selon la revendication 14, comprenant en outre :
une structure de pompe (13) montée sur ledit récipient, ladite structure de pompe comprenant une bride circonférentielle (114), ladite bride circonférentielle (114) située sur ladite structure de pompe venant en prise avec ladite bride circonférentielle (103) située sur ladite partie supérieure.

16. Appareil selon la revendication 15, comprenant en outre :
une deuxième voie d'évent (115) passant par ladite bride circonférentielle (114) sur ladite structure de pompe, ladite deuxième voie d'évent étant alignée avec ladite première voie d'évent.

17. Appareil selon la revendication 12, dans lequel :
ladite partie supérieure comprend une paroi latérale (116) s'étendant axialement-intérieurement, ladite voie d'évent (111) traversant ladite paroi latérale.

18. Appareil selon la revendication 17, comprenant en outre :
une structure de pompe (13) montée sur ledit récipient, ladite structure de pompe venant en prise avec ladite paroi latérale (116) s'étendant axialement-intérieurement.

19. Appareil selon la revendication 12, comprenant en outre :
une structure de pompe (13) montée sur ledit récipient, ladite structure de pompe ayant une extrémité d'entrée adjacente à une extrémité axialement extérieure dudit tube formant siphon (108).

20. Appareil selon la revendication 19, dans lequel :
ladite partie supérieure comprend une paroi latérale (116) s'étendant axialement-intérieurement; ladite structure de pompe (13) venant en prise avec ladite paroi latérale.

21. Appareil selon la revendication 19, dans lequel :
ladite partie supérieure comprend une bride circonférentielle (103), ladite structure de pompe (13) venant en prise avec ladite bride.

22. Appareil selon la revendication 12, dans lequel :
ladite structure à tube formant siphon (102) est formée d'une seule pièce avec ledit récipient (1).

23. Appareil selon la revendication 12, dans lequel :
le diamètre dudit tube formant siphon (108) varie le long de la longueur axiale dudit tube formant siphon.

24. Appareil selon la revendication 12, dans lequel :
le tube formant siphon (108) est ondulé.

25. Appareil selon la revendication 24, dans lequel :
le tube formant siphon (108) est constitué d'un matériau élastique faisant que son état normal est un état affaissé.

26. Appareil de remplissage et de distribution à partir d'un récipient, comprenant :
une section tubulaire (108); et
une section supérieure (109), ladite section supérieure (109) étant reliée à ladite section tubulaire (108) à une extrémité de ladite section tubulaire, ladite section supérieure ayant un passage reliant une partie intérieure de ladite section tubulaire à une partie intérieure de ladite section supérieure, ladite section supérieure comprenant en outre :
une première bride (103) adaptée pour venir en prise avec une sortie d'un récipient;
une voie d'évent (11); et
une deuxième bride (110), adaptée pour venir en prise avec une buse de remplissage (12) insérée dans ladite section supérieure.

27. Appareil selon la revendication 26, dans lequel :
ladite section tubulaire (108) est ondulée.

28. Appareil selon la revendication 27, dans lequel :
le tube formant siphon (108) est constitué d'un matériau élastique faisant qu'à l'état normal il est affaissé.

29. Appareil selon la revendication 26, dans lequel ladite voie d'évent (111) passe à travers ladite première bride (103).

30. Appareil selon la revendication 27, dans lequel :
ladite section supérieure comprend en outre une paroi latérale (108) s'étendant intérieurement, ladite voie d'évent (111) passant à travers ladite paroi latérale (106).

31. Appareil selon la revendication 26, dans lequel :
la section supérieure est en outre adaptée pour venir en prise avec une structure de pompe (13).

32. Appareil selon la revendication 27, dans lequel :
le diamètre de ladite section tubulaire (108) varie le long de la longueur axiale de ladite section tubulaire.

## Revendications (Revendications pour l'(les) Etat(s) contractant(s) suivant(s): FR)

1. Procédé de remplissage d'un container (1) avec un produit devant être distribué, comprenant les étapes consistant à :
fournir un récipient de distribution (1) à goulot étroit;
disposer une structure à tube formant siphon (102), au moins partiellement à l'intérieur du récipient, ladite structure à tube formant siphon comprenant un tube formant siphon (108), de manière que ledit tube formant siphon (108) s'étende sensiblement axialement à l'intérieur du récipient;
caractérisé en ce que ledit tube formant siphon s'étend jusqu'au fond dudit récipient, et en ce qu'une buse de remplissage (12) est mise en prise avec la structure à tube formant siphon (102), près d'une extrémité axialement extérieure dudit tube formant siphon (108);
un produit (105) est distribué par ladite buse de remplissage de sorte qu'il s'écoule par ledit tube formant siphon (108) et pénétrer jusqu'au fond dudit récipient (1), de sorte que ledit produit (105) remplisse complètement ledit tube formant siphon (108); et
ladite buse de remplissage (12) est ensuite dégagée de ladite structure à tube formant siphon.

2. Procédé selon la revendication 1, comprenant en outre l'étape consistant à :
fournir une voie d'évent (111) dans ladite structure à tube formant siphon (102), ladite voie d'évent (111) restant ouverte durant ladite étape de distribution d'un produit (105) par ladite buse de remplissage (12), de sorte que l'air se trouvant dans le récipient s'échappe de celui-ci.

3. Procédé selon la revendication 2, comprenant en outre l'étape consistant à :
pendant la durée de ladite étape de distribution d'un produit (105) par ladite buse de remplissage (12), appliquer un vide à ladite voie d'évent (111) pour extraire l'air dudit récipient, et pour attirer ledit produit (105) à l'intérieur dudit récipient.

4. Procédé selon la revendication 2, comprenant en outre l'étape consistant à :
fournir une bride (103) sur ladite structure à tube formant siphon, la bride venant en prise avec ledit récipient (1) et fournissant ladite voie d'évent (111) au travers de ladite bride.

5. Procédé selon la revendication 2, comprenant en outre l'étape consistant à :
fournir une paroi latérale faisant saillie axialement-intérieurement sur ladite structure à tube formant siphon (102), et aménager ladite voie d'évent (111) à travers ladite paroi latérale.

6. Procédé selon la revendication 1, comprenant en outre l'étape consistant à :
fixer une pompe (13) sur ladite structure à tube formant siphon, après ladite étape de désengagement de ladite buse de remplissage (12) vis-à-vis de ladite structure à tube formant siphon.

7. Procédé selon la revendication 6, comprenant en outre l'étape consistant à :
fournir une bride circonférentielle (103) reliée audit tube formant siphon, et mettre en prise ladite pompe (13) avec ladite bride circonférentielle.

8. Procédé selon la revendication 6, comprenant en outre l'étape consistant à :
fournir une paroi latérale (116) faisant saillie axialement-intérieurement sur ladite structure à tube formant siphon, et mettre en prise ladite pompe (13) avec ladite paroi latérale.

9. Procédé selon la revendication 1, comprenant en outre l'étape consistant à :
fournir une bride circonférentielle (110) reliant audit tube formant siphon (108) et à ladite structure à tube formant siphon, ladite buse de remplissage (12) venant en prise avec ladite bride circonférentielle durant lesdites étapes de mise en prise d'une buse de remplissage avec la structure à tube formant siphon et de distribution d'un produit par ladite buse de remplissage.

10. Procédé selon la revendication 1, comprenant en outre l'étape consistant à :
modifier le diamètre dudit tube formant siphon (108) le long de ladite longueur axiale dudit tube formant siphon.

11. Procédé selon la revendication 1, comprenant en outre l'étape consistant à :
façonner ledit tube formant siphon (108) en l'ondulant, de sorte que, pendant ledit processus de distribution d'un produit par ladite buse de remplissage, le diamètre dudit tube formant siphon augmente.

12. Appareil pour distribuer un produit fluide (105), comprenant :
un récipient (1) pour contenir ledit produit fluide et une structure à tube formant siphon (102), comprenant une partie supérieure (109) et un tube formant siphon (108), s'étendant axialement à l'intérieur dans ledit récipient et ayant une extrémité axialement extérieure reliée à ladite partie supérieure (109), caractérisé en ce que ladite partie supérieure (109) vient directement en prise avec ledit récipient et a une voie d'évent (111) permettant à de l'air de pénétrer dans le, et de sortir du, dit récipient (1) durant une opération de remplissage et de distribution, et en ce que ledit tube formant siphon s'étend intérieurement jusqu'au fond dudit récipient.

13. Appareil selon la revendication 12, dans lequel ladite partie supérieure est adaptée pour venir en prise avec une buse de remplissage (12) afin de permettre audit produit de remplir ledit récipient, via ledit tube formant siphon (108).

14. Appareil selon la revendication 12, dans lequel :
ladite partie supérieure vient en prise avec ledit récipient via une bride circonférentielle, ladite voie d'évent (111) passant à travers ladite bride circonférentielle.

15. Appareil selon la revendication 14, comprenant en outre :
une structure de pompe (13) montée sur ledit récipient, ladite structure de pompe comprenant une bride circonférentielle (114), ladite bride circonférentielle (114) située sur ladite structure de pompe venant en prise avec ladite bride circonférentielle (103) située sur ladite partie supérieure.

16. Appareil selon la revendication 15, comprenant en outre :
une deuxième voie d'évent (115) passant par ladite bride circonférentielle (114) sur ladite structure de pompe, ladite deuxième voie d'évent étant alignée avec ladite première voie d'évent.

17. Appareil selon la revendication 12, dans lequel :
ladite partie supérieure comprend une paroi latérale (116) s'étendant axialement-intérieurement, ladite voie d'évent (111) traversant ladite paroi latérale.

18. Appareil selon la revendication 17, comprenant en outre :
une structure de pompe (13) montée sur ledit récipient, ladite structure de pompe venant en prise avec ladite paroi latérale (116) s'étendant axialement-intérieurement.

19. Appareil selon la revendication 12, comprenant en outre :
une structure de pompe (13) montée sur ledit récipient, ladite structure de pompe ayant une extrémité d'entrée adjacente à une extrémité axialement extérieure dudit tube formant siphon (108).

20. Appareil selon la revendication 19, dans lequel :
ladite partie supérieure comprend une paroi latérale (116) s'étendant axialement-intérieurement; ladite structure de pompe (13) venant en prise avec ladite paroi latérale.

21. Appareil selon la revendication 19, dans lequel :
ladite partie supérieure comprend une bride circonférentielle (103), ladite structure de pompe (13) venant en prise avec ladite bride.

22. Appareil selon la revendication 12, dans lequel :
ladite structure à tube formant siphon (102) est formée d'une seule pièce avec ledit récipient (1).

23. Appareil selon la revendication 12, dans lequel :
le diamètre dudit tube formant siphon (108) varie le long de la longueur axiale dudit tube formant siphon.

24. Appareil selon la revendication 12, dans lequel :
le tube formant siphon (108) est ondulé.

25. Appareil selon la revendication 24, dans lequel :
le tube formant siphon (108) est constitué d'un matériau élastique faisant que son état normal est un état affaissé.

26. Appareil de remplissage et de distribution à partir d'un récipient, comprenant :
une section tubulaire (108); et
une section supérieure (109), ladite section supérieure (109) étant reliée à ladite section tubulaire (108) à une extrémité de ladite section tubulaire, ladite section supérieure ayant un passage reliant une partie intérieure de ladite section tubulaire à une partie intérieure de ladite section supérieure, ladite section supérieure comprenant en outre :
une première bride (103) adaptée pour venir en prise avec une sortie d'un récipient;
une voie d'évent (11); et
une deuxième bride (110), adaptée pour venir en prise avec une buse de remplissage (12) insérée dans ladite section supérieure.

27. Appareil selon la revendication 26, dans lequel :
ladite section tubulaire (108) est ondulée.

28. Appareil selon la revendication 27, dans lequel :
le tube formant siphon (108) est constitué d'un matériau élastique faisant qu'à l'état normal il est affaissé.

29. Appareil selon la revendication 26, dans lequel ladite voie d'évent (111) passe à travers ladite première bride (103).

30. Appareil selon la revendication 27, dans lequel :
ladite section supérieure comprend en outre une paroi latérale (108) s'étendant intérieurement, ladite voie d'évent (111) passant à travers ladite paroi latérale (106).

31. Appareil selon la revendication 26, dans lequel :
la section supérieure est en outre adaptée pour venir en prise avec une structure de pompe (13).

32. Appareil selon la revendication 27, dans lequel :
le diamètre de ladite section tubulaire (108) varie le long de la longueur axiale de ladite section tubulaire.
